# EUROPÄISCHE PATENTSCHRIFT

(11) **EP 1 133 038 B1**
(45) Veröffentlichungstag und Bekanntmachung des Hinweises auf die Patenterteilung: **02.05.2003**
(21) Anmeldenummer: 01104545.7
(22) Anmeldetag: 05.03.2001
(51) Int. Cl.: H02G 3/30, F16L 3/23, B60R 16/02

(54) **Kabelhalter zur Befestigung von Kabeln in Fahrzeugstrukturen**
Cable holder for fixing cables in a vehicule structure
Porte-câbles pour fixer des câbles dans une structure de véhicule

(30) Priorität: 06.03.2000 DE 10010933
(43) Veröffentlichungstag der Anmeldung: 12.09.2001
(73) Patentinhaber: EADS Deutschland GmbH, 85521 Ottobrunn (DE)
(72) Erfinder: Koziol, Siegmund, 85664 Hohenlinden (DE)

(56) Entgegenhaltungen:
- US-A- 3 632 069
- PATENT ABSTRACTS OF JAPAN vol. 1998, no. 13, 30. November 1998 (1998-11-30) & JP 10 220649 A (BUREST KOGYO KENKYUSHO CO LTD), 21. August 1998 (1998-08-21)

## Beschreibung

Die Erfindung betrifft einen Kabelhalter zur Befestigung von Kabeln in Fahrzeugstrukturen.

Aus dem allgemeinen Stand der Technik sind bisher nur entsprechend geformte Anschlußelemente an Fahrzeugstrukturen bekannt, an denen mittels aus dem Stand der Technik bekannten Kabelbindern Kabel befestigt werden können. Diese Anschlußstücke können die Form von Ösen, Hacken aufweisen. Nachteilig an diesen Kabelhaltern ist, daß diese selbst Bestandteile der Struktur sind und dadurch im Zusammenhang mit der Entwicklung der gesamten Struktur sehr aufwendig sind.

Weiterhin ist aus der DE-GM 19 89 458 ein Kabelhalter zur Befestigung von Kabeln mittel Kabelbindem bekannt, welcher eine Befstigungslasche und eine einstückig mit der Lasche ausgebildete wannenförmige Wulst zum Auflegen der Kabel und eine Durchführ-Öse für den Kabelbinder aufweist. Aus der DE-GM 18 86 744 ist ferner ein Kabelhalter mit einer wannenförmigen Auflage bekannt, welche zwei Schenkel mit jeweils einer Öse zum Durchführen des Kabelbinders besitzt.

Die US-A-3 632 069 offenbart einen Kabelhalter zur Befestigung von Kabeln, welcher eine Befestigungslasche mit einer Bohrung (15) und einer winklig zu dieser angeordneten wannenförmigen Wulst zum Auflegen der Kabel aufweist, die einen Wannenboden zwei Ösen aufweist.

Es ist die Aufgabe der Erfindung, einen Kabelhalter zur Anbringung an Fahrzeugstrukturen zu schaffen, der auch bei der Montage an schwerzugänglichen Stellen möglichst einfach montierbar ist und mit einfachem Mittel ausreichend stabil anbringbar ist

Die Aufgabe wird mit den Merkmalen des Anspruchs 1 gelöst. Weitere Ausführungsformen sind in den Unteransprüchen angegeben.

Im folgenden wird die Erfindung anhand der beigefügten Figuren beschrieben, die zeigen:
- Fig. 1 eine bevorzugte Ausführungsform des erfindungsgemäßen Kabelhalters in perspektivischer Darstellung ohne daran befestigten Kabeln,
- Fig. 2 eine perspektivische Darstellung des Kabelhalters nach der Figur 1 mit daran befestigten Kabeln, und
- Fig. 3 eine perspektivische Darstellung des Kabelhalters nach der Figur 1 in einer der Darstellung der Figur 1 in gegengesetzten Blickrichtung mit daran befestigten Kabeln.

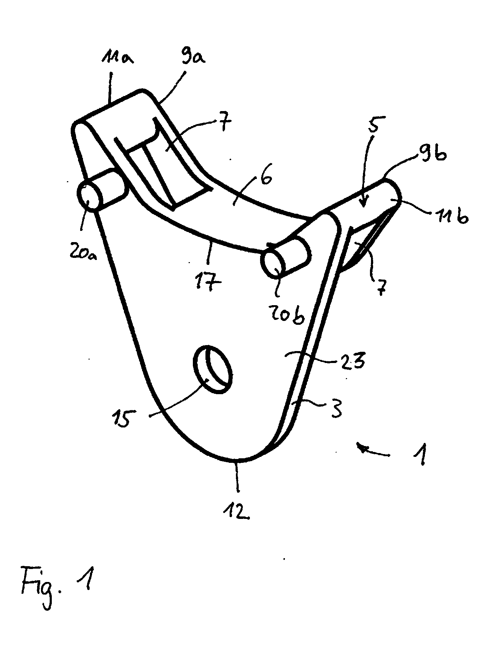

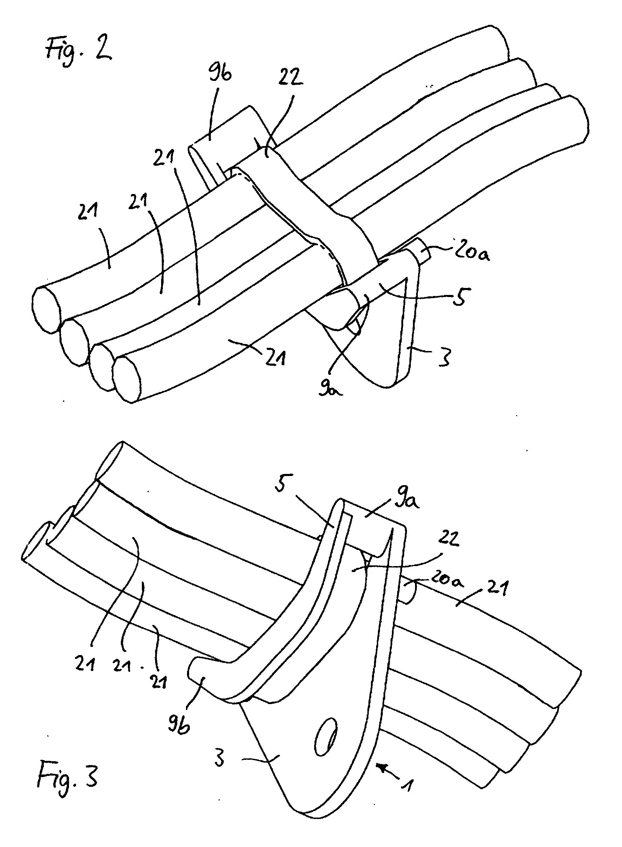

Der erfindungsgemäße Kabelhalter 1 ist einstückig ausgebildet und umfaßt eine Befestigungslasche 3 und eine wannenförmige Wulst 5. Die Wulst 5 weist einen Wannenboden 6 und zwei daran am Winkel angeordnete Schenkel 9a, 9b auf. Die Wulst 5 erstreckt sich in ihre Breite winklig und vorzugsweise rechtwinklig zur Befestigungslasche 3, die als Ebene oder Platte ausgeführt ist und sich dabei von den freien Enden 11a bzw. 11b der Schenkel 9a bzw. 9b zum freien Ende 12 der Befestigungslasche 3 hin verjüngt. Die Befestigungslasche 3 geht an einer Seite der Wulst in diese über und ist vorzugsweise mit dieser einstückig ausgebildet, wodurch sich eine besonders günstige Herstellbarkeit ergibt. Im Bereich des freien Endes 12 ist eine Bohrung oder ein Befestigungsloch 15 zur Befestigung der Befestigungslasche 3 bzw. des Kabelhalters 1 an einer entsprechenden Stelle der Umgebungsstruktur mittels üblichen Verbindungselementen vorgesehen.

Das wulstseitige Ende der Befestigungslasche 3 ist so gestaltet, daß die Befestigungslasche 3 über eine Kante 17 in die Wulst 5 übergeht. An die Befestigungslasche 3 nahe der Kante 17 und im Bereich der Schenkel 9a, 9b ist jeweils eine Nase 20a, 20b oder ein Stift 20 vorgesehen, der sich senkrecht zur ebenen Oberfläche 23 also in Richtung zur Breitenerstreckung der Wulst 5 erstreckt. Bei der Befestigung der Befestigungslasche 3 an einer Umgebungsstruktur liegen die beiden Nasen 20a, 20b an einer geeigneten Kantenlinie der Umgebungsstruktur auf. Das durch die Bohrung 15 hindurchgehende Verbindungselement bildet zusammen mit den an einer entsprechenden Kante aufliegenden Nasen 20a, 20b eine stabile Halterung und insbesondere eine Abstützung gegen die Drehrichtung. Mittels des die Bohrung durchfragenden Befestigungsmittels sowie durch die Nasen 20a, 20b wird der erfindungsgemäße Kabelhalter 1 mit einfachen Montagemitteln und geringem Aufwand in einer stabilen Weise an der Fahrzeugstruktur befestigt.

Dabei muß die Umgebungstruktur einen regelmäßigen oder unregelmäßigen Durchbruch oder eine flache Kante aufweisen. Der regelmäßige Durchbruch kann eine Bohrung, eine Elipse oder ein anderer geometrisch gestalteter Durchgang sein.

Insgesamt ist der erfindungsgemäße Kabelhalter 1 als Y-Halter ausgestaltet. Die Wannenweite liegt im Bereich zwischen 25 und 30 mm und die Wannentiefe zwischen 12 und 18 mm. Die Ösen 7 sind jeweils vorzugsweise rechteckig gebildet und haben eine Seitenlänge zwischen 3 und 10 mm. Dadurch ergibt sich eine besonders günstige Befestigungsmöglichkeit von Kabeln 21 mittels bekannter Kabelbinder 22.

Nach der Montage des erfindungsgemäßen Kabelhalters an der Umgebungstruktur wird das zu befestigende Kabel 21 in den Wannenboden 8 gelegt und mittels Kabelbinder 22 nach dem Stand der Technik, die durch die Ösen 7 hindurchgeführt werden, auf dem Wannenboden 8 befestigt.

Das Material des erfindungsgemäßen Kabelhalters 1 ist Polyetheretherketon. Dieses Material kann auch mit 10 bis 30 Masse% Glasfasern versehen sein, wobei vorzugsweise 30 Masse-% Glasfasern vorgesehen sind.

Die Nasen 20a, 20b sind vorzugsweise an einer Stelle auf der Befestigungslasche 3 vorgesehen, daß deren Umfangslinie höchstens den halben Nasendurchmesser von der Kante 17 entfernt liegt. Die Nasen 20a, 20b haben eine Länge zwischen 2 und 4 mm und vorzugsweise von 3 mm und einen Durchmesser von 2 bis 5 mm und vorzugsweise von 2,5 mm. Die Nasen 20a, 20b sind vorzugsweise als Stifte oder Zylinder ausgebildet und können jedoch auch eine andere gekrümmte Außenstruktur haben, beispielsweise können sie abschnittsweise ellipsenförmig gekrümmt sein im Bereich der Auflagefläche der Umgebungsstruktur.

Die Wannenweite ist definiert als der Abstand zwischen den freien Enden 11a, 11b der Schenkel 9a, 9b, während die Wannentiefe als der Abstand zwischen der Verbindungslinie zwischen dem freien Ende der Schenkel 9a, 9b und dem davon in senkrechter Richtung entferntesten Punkt des Wannenbodens 6 definiert ist.

Alternativ kann die Befestigungslasche 3 auch winklig zur Oberfläche des als Auflagefläche für Kabel 21 dienenden Wannenbodens angeordnet sein. Eine derartige Ausgestaltung hängt vom jeweiligen Anwendungsfall ab.

## Patentansprüche

1. Kabelhalter zur Befestigung von Kabeln (21) mittels Kabelbindem (22), welcher eine Befestigungslasche (3) mit einer Bohrung (15) zur Befestigung desselben mittels Verbindungselementen an einer Fahrzeugstruktur und einen in seiner Breitenrichtung winklig zur Befestigungslasche angeordneten wannenförmigen Wulst (5) zum Auflegen der Kabel (21) aufweist, der einstückig mit der Befestigungslasche (3) ausgebildet ist und einen Wannenboden (6) sowie zwei sich von dem Wannenboden (6) aus erstreckende Schenkel (9a, 9b) mit jeweils einer Öse (7) aufweist,
**dadurch gekennzeichnet,**
**daß** an der Befestigungslasche (3) im Bereich jedes Schenkels (9a, 9b) jeweils eine Nase (20a, 20b) zur Auflage an einer entsprechenden Kantenlinie der Fahrzeugstruktur angeordnet ist, um den Kabelhalter (1) gegen die Drehrichtung abzustützen.

2. Kabelhalter nach dem Anspruch 1, **dadurch gekennzeichnet, daß** jede Nase (21a) als Stift gestaltet ist.

3. Kabelhalter nach dem Anspruch 1 oder 2, **dadurch gekennzeichnet, daß** der Kabelhalter einstückig und aus Polyetheretherketon gebildet ist.

4. Kabelhalter nach dem Anspruch 3, **dadurch gekennzeichnet, daß** der Kabelhalter 10 bis 30 Masse-% Glasfasern enthält.

5. Kabelhalter nach einem der voranstehenden Ansprüche, **dadurch gekennzeichnet, daß** jede Öse (7) rechteckförmig mit einer Seitenlänge zwischen 3 und 10 mm gebildet ist.

6. Kabelhalter nach einem der voranstehenden Ansprüche 2 bis 5, **dadurch gekennzeichnet, daß** die Länge jedes Stifts (20a, 20b) zwischen 3 und 4 mm und der Durchmesser jedes Stifts (20a, 20b) zwischen 2 und 5 mm beträgt.

7. Kabelhalter nach einem der voranstehenden Ansprüche, **dadurch gekennzeichnet, daß** die Wannenweite des Wulstes (5) zwischen 25 und 30 mm und die Wannentiefe zwischen 12 und 18 mm beträgt.

## Claims

1. A cable holder for fixing cables (21) by means of cable ties (22), which has a fixing plate (3) having a bore (15) for fixing it to a vehicle structure by means of connecting elements and a trough-shaped bead (5) against which the cable (21) rests, said bead being arranged at an angle widthways to the fixing plate, being constructed in one piece with the fixing plate (3) and having a trough base (6) and also two limbs (9a, 9b) which extend from the trough base (6) and each have an eyelet (7),
**characterised in that**
a respective lug (20a, 20b) for resting against a corresponding edge line of the vehicle structure is arranged on the fixing plate (3) in the region of each limb (9a, 9b) in order to support the cable holder (1) against the direction of rotation.

2. A cable holder according to Claim 1, **characterised in that** each lug (20a, 20b) is constructed as a pin.

3. A cable holder according to Claim 1 or 2, **characterised in that** the cable holder is formed in one piece and is made of polyetheretherketone.

4. A cable holder according to Claim 3, **characterised in that** the cable holder contains 10 to 30% by mass of glass fibres.

5. A cable holder according to one of the preceding claims, **characterised in that** each eyelet (7) is formed in a rectangular shape with a side length of between 3 and 10 mm.

6. A cable holder according to one of the preceding Claims 2 to 5, **characterised in that** the length of each pin (20a, 20b) is between 3 and 4 mm and the diameter of each pin (20a, 20b) is between 2 and 5 mm.

7. A cable holder according to one of the preceding claims, **characterised in that** the trough width of the bead (5) is between 25 and 30 mm and the trough depth is between 12 and 18 mm.

## Revendications

1. Porte-câbles pour fixer les câbles (21) à l'aide de colliers (22), comprenant une patte de fixation (3) avec un perçage (15) pour fixer le porte-câbles à l'aide d'éléments de liaison à une structure de véhicule, ainsi qu'un bourrelet en forme de cuvette (5) dans la direction transversale de la patte de fixation pour se poser sur les câbles (21), ce bourrelet étant réalisé en une seule pièce avec la patte de fixation (3) et comportant un fond de cuvette (6) ainsi que deux branches (9a, 9b) partant du fond de cuvette (6) et ayant chacune un oeillet (7),
**caractérisé en ce que**
la patte de fixation (3) comporte au niveau de chaque branche (9a, 9b) un ergot (20a, 20b) respectif pour s'appuyer contre la ligne d'arête correspondante de la structure du véhicule et appuyer le porte-câbles (1) pour le bloquer en rotation.

2. Porte-câbles selon la revendication 1,
**caractérisé en ce que**
chaque ergot (20a, 20b) est en forme de broche.

3. Porte-câbles selon la revendication 1 ou 2,
**caractérisé en ce que**
le porte-câbles est réalisé en une seule pièce en polyéther cétone.

4. Porte-câbles selon la revendication 3,
**caractérisé en ce qu'**
il contient une masse de 10 à 30 % de fibre de verre.

5. Porte-câbles selon l'une des revendications précédentes,
**caractérisé en ce que**
chaque oeillet (7) a une forme rectangulaire avec une longueur d'arête de 3 à 10 mm.

6. Porte-câbles selon l'une des revendications 2 à 5,
**caractérisé en ce que**
la longueur de chaque ergot (20a, 20b) est comprise entre 3 et 4 mm et son diamètre est compris entre 2 et 5 mm.

7. Porte-câbles selon l'une des revendications précédentes,
**caractérisé en ce que**
la largeur de la cuvette du bourrelet (5) est comprise entre 25 et 30 mm et la profondeur de la cuvette comprise entre 12 et 18 mm.
